# EUROPÄISCHE PATENTANMELDUNG

(11) **EP 1 609 976 A1**
(43) Veröffentlichungstag der Anmeldung: **28.12.2005**
(21) Anmeldenummer: 04014984.1
(22) Anmeldetag: 25.06.2004
(51) Int. Cl.: F02M 25/07, F02D 9/10, F16K 1/20, F16K 5/06

(54) **Ventil im Bereich eines Verbrennungsmotors**

(71) Anmelder: Cooper-Standard Automotive (Deutschland) GmbH, 89601 Schelklingen (DE)
(72) Erfinder: Klipfel, Bernhard, 76187 Karlsruhe (DE); Toepel, Hans-Joachim, 68723 Schwetzingen (DE)
(74) Vertreter: HOFFMANN EITLE

(57) **Zusammenfassung**

Ein Ventil im Bereich eines Verbrennungsmotors weist eine Leitung (12) zur Führung eines Mediums, welche Leitung (12) eine Wandung aufweist, und ein Ventilelement (20) auf, das im geschlossenen Zustand innerhalb der Leitung (12) angeordnet ist, und zumindest im vollständig geöffneten Zustand zumindest weitgehend mit der benachbarten Wandung der Leitung (12) fluchtet oder außerhalb derselben angeordnet ist und zur Führung des Mediums beiträgt.

## Beschreibung

### Technisches Gebiet

Die Erfindung betrifft ein Ventil im Bereich eines Verbrennungsmotors.

Auf dem Gebiet der Verbrennungsmotoren tritt regelmäßig der Fall auf, dass ein Medium durch geeignete Leitungen zu führen ist, und durch Ventile zu-, abgeschaltet oder reguliert werden muss. Beispielsweise wird üblicherweise in Abhängigkeit vom Betriebszustand Abgas auf die Frischluftseite zurückgeführt, um dadurch den Kraftstoffverbrauch und die Schadstoffemissionen zu senken. In einem derartigen Fall sind ein oder mehrere Abgasrückführventile vorgesehen. Ferner können Ventile in der Abgasanlage vorgesehen sein, um die Abgasströmung freizugeben, anzuhalten oder umzuleiten. Diese Maßnahmen können beispielsweise verwendet werden, um den Abgasgegendruck zu regulieren und/oder einzelne Komponenten, wie z.B. Katalysatoren, Filter, Kühler oder Ähnliches zu- oder abzuschalten. Diese Anwendungsfälle seien lediglich als Beispiele genannt.

### Stand der Technik

Aus der DE 27 03 687 A1 ist ein Abgasrückführventil bekannt, bei dem eine Abgaszuführleitung in die Saugleitung hineinragt. In der Saugleitung ist außerhalb der Abgaszuführleitung eine Drosselklappe vorgesehen, die für ein Öffnen oder Schließen der Abgaszuführleitung sorgt.

Beim Gegenstand der DE 195 49 107 A1 ragt ebenfalls eine Abgaszuführleitung in die Saugleitung hinein. Die Abgaszuführleitung ist an ihrem axialen Ende verschlossen und radial geöffnet. Über dem Ende der Abgaszuführleitung ist eine sogenannte Drehschieberglocke angeordnet, die eine Öffnung aufweist, die in Ausrichtung mit der Öffnung in der Abgaszuführleitung gebracht werden kann, um diese zu öffnen oder zu verschließen.

Aus der EP 1 245 820 A1 ist ein Abgasrückführventil bekannt, dessen drehbares Ventilelement derart exzentrisch gelagert ist, dass es im geöffneten Zustand am Rand der Abgasleitung angeordnet werden kann, um die Abgasströmung möglichst in geringem Umfang zu beeinflussen.

Schließlich ist in der EP 03 029 491 der Anmelderin ein Abgasrückführventil beschrieben, das ein Strömungsleitelement aufweist, hinter dem ein Ventilelement im geöffneten Zustand angeordnet werden kann, um die Abgasströmung in möglichst geringem Umfang zu stören.

### Darstellung der Erfindung

Der Erfindung liegt die Aufgabe zugrunde, ein Ventil im Bereich eines Verbrennungsmotors zu schaffen, das im Hinblick auf die Vermeidung von Strömungsverlusten weiter verbessert ist.

Die Lösung dieser Aufgabe folgt durch das im Anspruch 1 beschriebene Ventil.

Demzufolge weist das erfindungsgemäße Ventil, das für den Bereich eines Verbrennungsmotors vorgesehen und geeignet ist, zum einen eine Leitung zur Führung eines Mediums auf. Bei dem Medium kann es sich beispielsweise um Abgas handeln, so dass in diesem Fall das erfindungsgemäße Ventil als Abgas- oder Abgasrückführventil Verwendung findet. Wenn es als Abgasventil vorgesehen ist, kann es in der Abgas- oder der Auspuffanlage vorgesehen sein, um die Strömung der Abgase anzuhalten, freizugeben, umzuleiten oder zu regulieren. Wie eingangs erwähnt, können diese Maßnahmen vorgesehen sein, um den Abgasgegendruck zu regulieren, Komponenten, wie z.B. Katalysatoren, Filter, Kühler u.ä. zu- oder abzuschalten, oder auch um z. B. den Klang der Abgasanlage, und damit des Fahrzeugs oder andere Eigenschaften zu verändern oder zu beeinflussen. Ferner kann das erfindungsgemäße Ventil als Abgasrückführventil Verwendung finden, um einen Abgasstrom auf die Frischluftseite des Motors zurückzuführen oder einen Luftstrom auf der Saugseite des Motor zu drosseln. Beispielsweise kann bei Dieselmotoren eine Erhöhung des treibenden Druckgefälles auf der Saugseite dadurch erreicht werden, dass eine hier vorgesehene Drosselklappe vollständig oder teilweise geschlossen wird. Ferner kann bei Dieselmotoren eine sogenannte Komfortabschaltung vorgesehen sein, die durch ein schlagartiges Schließen der Frischluftzufuhr bewirkt wird. Auch für diese Anwendungsfälle eignet sich das erfindungsgemäße Ventil.

Die erwähnte Leitung des erfindungsgemäßen Ventils weist eine Wandung auf. Ferner weist das Ventil ein Ventilelement auf, das im geschlossenen Zustand innerhalb der Leitung angeordnet ist. Hierdurch eignet sich das erfindungsgemäße Ventil insbesondere auch als Ventil, das einen Strom eines Mediums freigibt oder sperrt, ohne diesen notwendigerweise in eine zweite Leitung zuzuführen. Lediglich in dem letzteren Fall kann das Ventilelement nämlich in der zweiten Leitung, und damit in einem Bereich außerhalb der ersten Leitung angeordnet seien. Im Gegensatz dazu befindet sich das Ventilelement des erfindungsgemäßen Ventils im geschlossenen Zustand innerhalb der Leitung, in der das Medium geführt wird, das durch das erfindungsgemäße Ventil gesperrt, freigegeben, umgeleitet oder reguliert werden soll.

Besonders günstige Strömungsverhältnisse können durch das erfindungsgemäße Ventil dadurch erreicht werden, dass das Ventilelement zumindest im vollständig geöffneten Zustand zumindest weitgehend mit der benachbarten Wandung der Leitung fluchtet oder außerhalb derselben angeordnet ist. Um im geöffneten Zustand die beschriebene Situation, nämlich ein Fluchten des Ventilelements mit der Leitungswandung oder eine Anordnung außerhalb der Leitungswandung zu erreichen, ist in der Leitungswandung zumindest eine nachfolgend genauer beschriebene Ausnehmung vorgesehen. Aufgrund dieser Ausnehmung wird zur Beschreibung der Position des Ventilelements in seinem geöffneten Zustand auf die daran benachbarte Wandung der Leitung Bezug genommen. Es sei erwähnt, dass die in der Leitung herrschende Strömung bis zum Erreichen des (geöffneten) Ventilelements durch die Leitungswandung, und unmittelbar vor Erreichen des geöffneten Ventilelements durch die daran benachbarte Leitungswandung bestimmt wird. Im Bereich des (geöffneten) Ventilelements trägt dieses zur Führung des Mediums bei. Hierdurch können mit einfachen Maßnahmen die Strömungsverluste verringert werden. Es ist nämlich, wie beim Stand der Technik vorgesehen, kein zusätzliches Strömungsleitelement erforderlich. Vielmehr befindet sich das Ventilelement im geöffneten Zustand in einer Position, in der es zur Führung des Mediums beiträgt und gleichzeitig Störungen der Strömung vermeidet. Insbesondere kann davon die Rede sein, dass das Ventilelement im geöffneten Zustand einen Teil der Leitungswandung bildet. Die Leitungswandung kann dementsprechend durchgehend einwandig vorgesehen seien, und es ist keine zweite, innere Leitungswandung notwendig, wie sie durch ein separates Strömungsleitelement gebildet wird. Insbesondere ist deshalb bei dem erfindungsgemäßen Ventil das Ventilelement im geöffneten Zustand nicht durch andere Bauteile verdeckt.

Durch die erfindungsgemäße Maßnahme, das Ventilelement derart vorzusehen, dass es in seinem geöffneten Zustand mit der benachbarten Leitungswandung fluchtet oder außerhalb derselben angeordnet ist, kann eine weitgehend störungsfreie Strömung gewährleistet werden. Das geöffnete Ventilelement befindet sich nämlich nicht im inneren, lichten Querschnitt der Leitung, wo es die Strömung beeinflussen würde. Vielmehr bildet das Ventilelement zumindest in seinem vollständig geöffneten Zustand eine Art Fortsetzung der Leitungswandung und trägt damit zur zweckmäßigen Führung des Mediums bei. Störungen können vermieden werden. Dies gilt insbesondere auch in dem Fall, dass das Ventilelement in seinem vollständig geöffneten Zustand außerhalb der benachbarten Leitungswandung angeordnet ist.

Wenngleich es zu einer ausreichenden Vermeidung von Strömungsverlusten ausreicht, wenn das Ventilelement in seinem vollständig geöffneten Zustand weitgehend mit der benachbarten Leitungswandung fluchtet, wird bevorzugt, dass dieses vollständig mit der Leitungswandung fluchtet. Ferner wird für die Anordnung des Ventilelements außerhalb der benachbarten Leitungswandung bevorzugt, dass es sich in diesem Zustand ebenfalls vollständig außerhalb der benachbarten Leitungswandung befindet, um Störungen der Strömung möglichst umfangreich auszuschließen.

Zu der Maßnahme, ein Ventil vorzusehen, bei dem das Ventilelement zumindest in seinem weitgehend geöffneten Zustand zumindest weitgehend mit der benachbarten Wandung der Leitung fluchtet, sei erwähnt, dass in diesem Fall das Ventilelement, insbesondere auch in seinem geschlossenen Zustand, nicht notwendigerweise innerhalb der Leitung des Ventils angeordnet sein muss. Ferner wird es im Zusammenhang mit der vorliegenden Anmeldung auch als Neuerung angesehen, ein Ventil mit einem Ventilelement vorzusehen, das zumindest im vollständig geöffneten Zustand zumindest weitgehend mit der benachbarten Leitungswandung fluchtet. Diese Maßnahme kann in geeigneter Weise mit sämtlichen vorrangehend oder nachfolgend beschriebenen Merkmalen kombiniert werden.

Bevorzugte Weiterbildung des erfindungsgemäßen Ventils sind in den weiteren Ansprüchen beschrieben.

Für das Ventilelement wird bevorzugt, dass dieses insgesamt gewölbt ausgebildet ist. Wenngleich Ventilelemente bekannt sind, die auf einer Seite, beispielsweise der stromabwärtigen Seite, eine Wölbung aufweisen, ist das Ventilelement des erfindungsgemäßen Ventils erstmalig insgesamt gewölbt. Hierdurch kann besonders einfach und effizient die beschriebene Anordnung, nämlich das Fluchten mit der benachbarten Leitungswandung und/oder die Anordnung außerhalb derselben realisiert werden, um die Strömung möglichst wenig zu beeinflussen. Das erfindungsgemäße Ventilelement kann in diesem Fall dadurch besonders einfach gestaltet werden, dass es als einwandiges Blechteil vorgesehen wird, das beispielsweise die Wölbung der beispielsweise als Kreiszylinder ausgebildeten Leitungswandung aufweist und somit besonders gut fluchtend mit dieser angeordnet werden kann. Auch zu diesem Merkmal sei erwähnt, dass es unabhängig von den vorangehenden und nachfolgend beschriebenen Merkmalen, mit denen es jedoch kombiniert werden kann, als Neuerung angesehen wird. Demzufolge wird mit der vorliegenden Anmeldung ein Ventil mit einem insgesamt gewölbt ausgebildeten Ventilelement vorgestellt. Mit anderen Worten weist das Ventilelement bevorzugt sowohl an der stromaufwärtigen als auch der stromabwärtigen Seite eine Wölbung auf. In einer besonderen Ausführungsform kann die Wölbung jedoch auch ausschließlich auf der stromaufwärtigen Seite vorgesehen sein. Für diese Seite wird eine konkave Wölbung, und für die stromabwärtige Seite eine konvexe Wölbung bevorzugt.

Grundsätzlich eignet sich die erfindungsgemäße Maßnahme für eine beliebige Bauform eines Ventils, unabhängig davon, ob dessen Ventilelement translatorisch, drehend oder in sonstiger Weise bewegbar ist. Es wird jedoch derzeit bevorzugt, das Ventilelement schwenkbar vorzusehen, und dieses in seinem vollständig geöffneten Zustand gewissermaßen in den Bereich der Leitungswandung zu verschwenken, um die Strömung möglichst wenig zu beeinflussen.

Für die Lagerung des Ventilelements wird derzeit bevorzugt, dieses zentrisch zu lagern. Mit anderen Worten befindet sich die Lagerung an einer zumindest weitgehend zentrischen Stelle bezüglich des Ventilelements. Bevorzugt kann die Lagerung ferner zentrisch bezüglich der Leitung, in der das Ventil vorgesehen ist und bevorzugt zentrisch zu dessen Mittelachse ausgebildet sein. Es ist jedoch ebenso denkbar und im Rahmen der Erfindung keineswegs ausgeschlossen, eine exzentrische Lagerung vorzusehen. Diese kann beispielsweise dazu genutzt werden, den auf das Ventilelement wirkenden Abgasdruck zum Schließen des Ventils, oder zumindest zu einer Unterstützung der Schließbewegung zu verwenden. Ebenso kann die Lagerung derart exzentrisch vorgesehen sein, dass der Abgasdruck die Öffnungsbewegung unterstützt. Im Gegensatz dazu ist bei der derzeit bevorzugten Ausführungsform mit zentrischer Lagerung ein Druckausgleich gegeben, der in bestimmten Anwendungsfällen zu Vorteilen führt.

Für die Lagerung des Ventilelements wird ferner derzeit bevorzugt, dass dieses einseitig gelagert ist. Diese Maßnahme bietet Kostenvorteile. Es sei erwähnt, dass ebenso eine beidseitige Lagerung möglich ist.

Besondere Vorteile können erhalten werden, wenn sich die Form des Ventilelements aus der Schnittkurve eines ersten Zylinders mit einem zweiten Zylinder ergibt. Die Mittelachsen der beiden Zylinder stehen zur Ermittlung der Schnittkurve bevorzugt senkrecht aufeinander. Hierdurch eignet sich das Ventilelement des erfindungsgemäßen Ventils besonders gut für eine Leitung mit kreisrundem Querschnitt. Die (gewölbte) Form des Ventilelements spiegelt gewissermaßen die Form der Leitung des Ventils wider. Nachdem das Ventilelement zumindest in einem vollständig geöffneten Zustand mit der benachbarten Wandung fluchtet, ist hierfür die Form der Leitungswandung, in dem bevorzugten Fall somit ein Teil des Zylindermantels, günstig. Wenn das Ventilelement jedoch in den geschlossenen Zustand gebracht wird, also beispielsweise um 90° verdreht wird, stellt es, wie oben beschrieben, einen Teil eines Zylindermantels dar, der in dem Leitungsinneren, also in einem weiteren Zylinder eine Abdichtung zu gewährleisten hat. Somit ergeben sich die Ränder des Ventilelements aus der Schnittkurve eines ersten Zylinders, von dem das Ventilelement ein Teil darstellt, mit einem zweiten Zylinder, der durch die Leitung gebildet wird.

In günstiger Weise weist die Leitung zumindest eine Ausnehmung zur Aufnahme des Ventilelements in seinem geöffneten Zustand auf, deren Form an die Form des Ventilelements angepasst ist. Hierdurch kann mit besonders einfachen Maßnahmen die erfindungsgemäße Anordnung des Ventilelements realisiert werden.

Besonders bevorzugt wird in diesem Zusammenhang, dass die Ausnehmung durch zumindest ein getrenntes Wandungselement gebildet wird, um für eine besonders einfache Montage zu sorgen.

### Kurze Beschreibung der Zeichnungen

Nachfolgend wird eine in den Zeichnungen dargestellte Ausführungsform der Erfindung näher erläutert. Es zeigen:
Fig. 1 eine perspektivische Explosionsansicht des erfindungsgemäßen Ventils;
Fig. 2 das erfindungsgemäße Ventil im geöffneten Zustand des Ventilelements; und
Fig. 3 das erfindungsgemäße Ventil im geschlossenen Zustand des Ventilelements.

### Ausführliche Beschreibung einer bevorzugten Ausführungsform der Erfindung

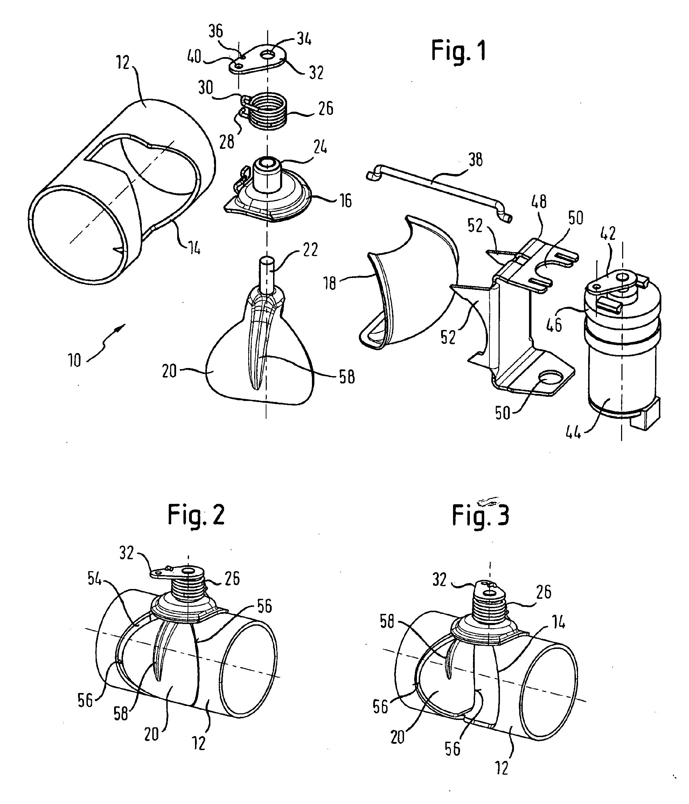

Wie in Fig. 1 zu erkennen ist, weist das erfindungsgemäße Ventil 10 zunächst eine Leitung 12 auf, die bei dem gezeigten Beispiel als kurzes Rohrstück mit weitgehend kreisrundem Querschnitt vorgesehen ist. Es versteht sich jedoch, dass die Leitung 12 auch länger ausgebildet sein kann, und einen anderen Querschnitt aufweisen kann. Um weitere Bestandteile des erfindungemäßen Ventils, wie nachfolgend beschrieben, montieren zu können, ist in der Wandung der Leitung 12 eine Aussparung 14 vorgesehen, die auch als Fenster beschrieben werden könnte. Diese Aussparung kann beispielsweise durch ein Laserschneidgerät hergestellt werden. Bei der gezeigten Ausführungsform wird die Aussparung 14 durch zwei getrennte Wandelemente, ein erstes Lager-Wandelement 16 und ein zweites Wandelement 18 verschlossen. In dem Lager-Wandelement 16 ist die Lagerung für ein Ventilelement 20 vorgesehen. Das Ventilelement 20 weist hierzu einen Lagerstift 22 auf. In dem Lager-Wandelement 16 ist eine hierzu passende Lagerbuchse 24 vorgesehen. Um diesen herum ist bei der gezeigten Ausführungsform eine Spiralfeder 26 angeordnet, die mittels eines ersten Hakens 28 an dem Lager-Wandelement 16 verhakt ist, um sich daran abzustützen. Mit einem zweiten Haken 30 ist die Spiralfeder 26 mit einem Hebelelement 32 verbunden. Mittels einer darin ausgebildeten Öffnung 34 ist das Hebelelement 32 auf den Lagerstift 22 gesteckt. Bei der gezeigten Ausführungsform spannt die Feder 26 durch ihre Abstützung an dem Lager-Wandelement 16 und das des Weiteren vorgesehene Verhaken mit dem Hebelelement 32 an einer Kerbe 36 das Ventilelement 20 in den offenen Zustand vor. Die Anordnung kann jedoch auch so vorgesehen sein, dass die Vorspannung in den geschlossenen Zustand vorgesehen ist, und das Öffnen gegen die Kraft der Feder erfolgt.

Bei der gezeigten Ausführungsform erfolgt das Schließen gegen die Kraft der Feder 26. Für die Betätigung des Ventilelements 20 ist bei der gezeigten Ausführungsform eine an beiden Enden weitgehend S-förmig gebogene Stange 38 vorgesehen, die mit dem einen Ende in eine zweite Öffnung 40 in dem Hebelelement 32 eingesetzt ist, und mit dem zweiten Ende in ein zweites Hebelelement 42 eingesetzt ist. Das zweite Hebelelement 42 ist im Bereich des Antriebs vorgesehen. Bei der gezeigten Ausführungsform ist der Antrieb als Elektromotor 44 mit aufgesetztem Planetengetriebe 46 ausgeführt. Es versteht sich jedoch, dass der Antrieb auch pneumatisch, hydraulisch oder in sonstiger geeigneten Weise gestaltet sein kann. Es kommt lediglich darauf an, dass bei der Betätigung das Hebelelement 42 derart gedreht wird, dass an der Stange 38 gezogen oder auf diese gedrückt wird, so dass das Hebelelement 32 entsprechend verdreht wird, und das Ventilelement 20 betätigt wird.

Bei der gezeigten Ausführungsform ist der Antrieb 44, 46 über einen in geeigneter Weise gestalteten Halter 48 an dem Wandungselement 18 angebracht. Auf Seiten des Antriebs 44, 46 weist der Halter 48 geeignete Ausparungen 50 auf, um den Antrieb 44, 46 einzusetzen und zu befestigen. Auf Seiten des Wandungselement 18 weist der Halter 48 geeignete Laschen 52 auf, um diesen an dem Wandungselement 18 zu befestigen. Im montierten Zustand verschließt das Wandungselement 18 bei der gezeigten Ausführungsform den seitlichen Bereich der Aussparung 14. In gleicher Weise verschließt das Lager-Wandungselement 16 den oberen Bereich der Aussparung 14. Wie in Fig. 1 zu erkennen ist, ist das Wandungselement 18 mit einer zur Außenseite hin ausgebildeten Wölbung versehen, wodurch in der Leitung 12 eine Ausnehmung gebildet wird. Diese dient der Aufnahme des Ventilelements 20 in seinem geöffneten Zustand und/oder ermöglicht die erforderlichen Bewegungen des Ventilelements 20.

In Fig. 2 ist dieser geöffnete Zustand gezeigt. Erfindungsgemäß befindet sich das Ventilelement 20 in dieser vollständig geöffneten Stellung in einer Position, in der es mit der benachbarten Wandung der Leitung 12 zumindest weitgehend fluchtet. Hierdurch wird die im Inneren der Leitung 12 geführte Strömung in besonders geringem Umfang beeinflusst. Lediglich an einer Seite des Ventilelements 20 ist ein vergleichsweise kleiner Spalt 54 vorgesehen, der dafür erforderlich ist, die notwendige Schwenkbewegung des Ventilelements 20 zu ermöglichen. Dieses kann nämlich in dem gezeigten Fall aus der in Fig. 2 gezeigten Stellung durch eine Drehung um 90° in Richtung des Urzeigersinns in die geschlossene Stellung gebracht werden. In dieser geschlossenen Stellung liegen die beiden Ränder 56 des Ventilelements 20 an der Innenseite der Leitung 12 an.

Dies ist in Fig. 3 gezeigt. Es sei erwähnt, dass sowohl in Fig. 2 als auch in Fig. 3 das getrennte Wandungselement 18 einschließlich des daran montierten Antriebs weggelassen ist, um die Verhältnisse besser darstellen zu können. Es versteht sich jedoch, dass die Aussparung 14 im Betriebszustand durch das Wandungselement 18 verschlossen ist. Ebenso versteht es sich, dass anstelle dieses Verschließens durch das Wandungselement 18 eine weitere Leitung vorgesehen sein kann, in welche das in der Leitung 12 geführte Medium umgeleitet werden kann. Mit anderen Worten ermöglicht die dargestellte Ausführungsform lediglich ein Sperren (Fig. 3), ein Freigeben (Fig. 2) oder ein Regulieren des Stromes durch eine geeignete Zwischenstellung des Ventilelements 20. Wenn sich jedoch anstelle des Wandungselements 18 eine weitere Leitung anschließt, wäre eine Umleitung des geführten Mediums möglich.

Insbesondere würde diese Umleitung in der in Fig. 3 gestellten Situation vollständig erfolgen. Die Ränder 56 des Ventilelements 20 liegen nämlich dichtend an den Innenflächen der Leitung 12 an und verhindern eine Strömung des Mediums durch die Leitung 12.

Zu den beiden gesonderten Wandungsstücken 16 und 18 sei erwähnt, dass es sich hierbei nicht notwendigerweise um zwei getrennte Wandungselemente handeln muss. Vielmehr könnte das Ventilelement 20 einschließlich seiner Lagerung und dem Antrieb an einem einzigen getrennten Wandungsstück vormontiert werden, und anschließend an der mit der Aussparung 14 versehenen Leitung 12 angebracht werden. Dieses Anbringen könnte als "Überstülpen" bezeichnet werden. Insbesondere bei einer Ausführungsform, bei der die Lagerung exzentrisch erfolgt, ist es möglich, dass das erforderliche getrennte Wandungselement einen Winkel von 180° oder weniger an dem Zylindermantel überdeckt und somit leicht montiert werden kann. Insofern bildet eine Ausführungsform mit einer exzentrischen Lagerung und einem einzigen gesonderten Wandungselement eine besonders bevorzugte Variante.

Demgegenüber ist die Lagerung bei der gezeigten Ausführungsform zentrisch bezüglich des Ventilelements 20 sowie bezüglich der Leitung 12. Wie erwähnt, ist jedoch ebenso eine bezüglich des Ventilelements 20 und/oder der Leitung 12 exzentrische Lagerung denkbar. Ferner ist die Lagerung lediglich einseitig ausgeführt. Dies ergibt gegenüber einer ebenso denkbaren, zweiseitigen Lagerung Kostenvorteile.

Aus den Figuren ist ferner erkennbar, dass das Ventilelement 20 als einwandiges Bauteil, beispielsweise als Blechteil vorgesehen sein kann, das insgesamt gewölbt ist. In den Fig. 1 und 2 ist die konvexe Wölbung zu dem Betrachter gerichtet. In Fig. 3 ist die konkave Wölbung erkennbar. Es sei ferner erwähnt, dass das Ventilelement bei der gezeigten Ausführungsform auf der Seite der konvexen Wölbung mit einer Sicke 58 versehen ist.

Die Ränder 56 des Ventilelements 20 ergeben sich als Schnittkurven zweier Zylinder. Wie aus Fig. 2 erkennbar, bildet das Ventilelement 20 nämlich im geöffneten Zustand einen Teil des Zylindermantels der Leitung 12. Im geschlossenen Zustand (vgl. Fig. 3) liegen die Ränder 56 dichtend an der Innenfläche der Leitung 12 an. Somit ist für die Ränder eine Form 56 günstig, die sich daraus ergibt, dass das Ventilelement 20, das sich (vgl. Fig. 2) als Wandabschnitt des Zylinders der Leitung 12 ergibt, mit dem Zylinder der Leitung 12 geschnitten wird, wie in Fig. 3 zu erkennen ist.

## Patentansprüche

1. Ventil (10) im Bereich eines Verbrennungsmotors, insbesondere Abgas- oder Abgasrückführventil oder Ventil auf der Frischluftseite, mit einer Leitung (12) zur Führung eines Mediums, welche Leitung (12) eine Wandung aufweist, und einem Ventilelement (20), das in geschlossenem Zustand innerhalb der Leitung (12) angeordnet ist und zumindest im vollständig geöffneten Zustand zumindest weitgehend mit der benachbarten Wandung der Leitung (12) fluchtet oder außerhalb derselben angeordnet ist und zur Führung des Mediums beiträgt.

2. Ventil nach Anspruch 1, **dadurch gekennzeichnet, dass** das Ventilelement (20) insgesamt gewölbt ist.

3. Ventil nach Anspruch 1 oder 2, **dadurch gekennzeichnet, dass** das Ventilelement (20) schwenkbar ist.

4. Ventil nach einem der vorangehenden Ansprüche, **dadurch gekennzeichnet, dass** das Ventilelement (20) zentrisch gelagert ist.

5. Ventil nach einem der vorangehenden Ansprüche, **dadurch gekennzeichnet, dass** das Ventilelement (20) einseitig gelagert ist.

6. Ventil nach einem der vorangehenden Ansprüche, **dadurch gekennzeichnet, dass** sich die Form des Ventilelements (20) aus der Schnittkurve eines ersten Zylinders mit einem zweiten Zylinder ergibt.

7. Ventil nach einem der vorangehenden Ansprüche, **dadurch gekennzeichnet, dass** die Leitung (12) eine Ausnehmung zur Aufnahme des Ventilelements (20) im geöffneten Zustand aufweist, deren Form an die Form des Ventilelements (20) angepasst ist.

8. Ventil nach Anspruch 7, **dadurch gekennzeichnet, dass** die Ausnehmung durch zumindest ein getrenntes Wandungselement (16, 18) gebildet ist.

## Geänderte Patentansprüche

### Geänderte Patentansprüche gemäss Regel 86(2) EPÜ.

**1.** Ventil (10) im Bereich eines Verbrennungsmotors, insbesondere Abgas- oder Abgasrückführventil oder Ventil auf der Frischluftseite, mit einer Leitung (12) zur Führung eines Mediums, welche Leitung (12) eine Wandung aufweist, und einem Ventilelement (20), das in geschlossenem Zustand innerhalb der Leitung (12) angeordnet ist und zumindest im vollständig geöffneten Zustand zumindest weitgehend mit der benachbarten Wandung der Leitung (12) fluchtet oder außerhalb derselben angeordnet ist und zur Führung des Mediums beiträgt, und dessen Form sich aus der Schnittkurve eines ersten Zylinders mit einem zweiten Zylinder ergibt.
